(19) **Europäisches Patentamt**
**European Patent Office**
**Office européen des brevets**

(11) **EP 4 157 028 B1**

(12) **FASCICULE DE BREVET EUROPEEN**

(45) Date de publication et mention
de la délivrance du brevet:
**06.03.2024 Bulletin 2024/10**

(21) Numéro de dépôt: **21723268.5**

(22) Date de dépôt: **05.05.2021**

(51) Classification Internationale des Brevets (IPC):
*A45C 3/02* (2006.01)      *A45C 5/03* (2006.01)
*A45C 15/00* (2006.01)      *G03B 21/10* (2006.01)
*G03B 21/30* (2006.01)

(52) Classification Coopérative des Brevets (CPC):
**A45C 5/03; A45C 3/02; A45C 15/00; G03B 21/10;
G03B 21/134; G03B 21/147; G03B 21/2033;
G03B 21/58**

(86) Numéro de dépôt international:
**PCT/EP2021/061911**

(87) Numéro de publication internationale:
**WO 2021/239422 (02.12.2021 Gazette 2021/48)**

(54) **BAGAGE COMPRENANT UN SYSTÈME DE VIDÉO-PROJECTION**

GEPÄCK MIT EINEM VIDEOPROJEKTIONSSYSTEM

LUGGAGE COMPRISING A VIDEO PROJECTION SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.05.2020 FR 2005620**

(43) Date de publication de la demande:
**05.04.2023 Bulletin 2023/14**

(73) Titulaire: **PA.COTTE SA
1009 Pully (CH)**

(72) Inventeurs:
• **COTTE, Pierre-Alain
92224 Amberg (DE)**
• **POREZ, Mathieu
44300 Nantes (FR)**
• **FERRE, Victorien
44000 Nantes (FR)**

(74) Mandataire: **reuteler & cie SA
Chemin de la Vuarpillière 29
1260 Nyon (CH)**

(56) Documents cités:
**AU-A4- 2019 101 252      DE-A1- 2 749 451**

**Description**

Le domaine de l'invention est celui de la conception et de la fabrication de bagages. Plus précisément, le domaine de l'invention est celui des accessoires pour bagage, et plus spécifiquement des accessoires pour mallette porte-documents.

Des mallettes porte-documents, également appelées attaché-case, permettent de transporter les documents ou autres objets de manière aisée et sûre.

Ces mallettes porte-documents forment une sous-catégorie des valises, et plus génériquement sont des bagages rigides.

Une mallette porte-documents comprend classiquement un caisson formé par un fond et un bandeau périphérique, un couvercle monté pivotant sur le caisson, et un mécanisme de verrouillage du couvercle dans une position rabattue sur le caisson. Une mallette porte-documents est également pourvue d'une poignée située sur le bandeau périphérique.

Ce type de bagage peut présenter une conception banale et n'être utilisé que dans un but utilitaire.

Toutefois, ces mallettes porte-documents peuvent être conçues pour former des objets luxueux.

Les utilisateurs de ces mallettes peuvent en effet être désireux de posséder une mallette porte-documents bénéficiant d'un visuel et de fonctionnalités attractifs.

A cet effet, les mallettes peuvent être conçues à partir de matériaux nobles tels que du bois, du cuir, ou encore des métaux.

Ces matériaux permettent d'améliorer la qualité perçue des mallettes.

Du cuir permet notamment d'offrir un aspect visuel et un ressenti au toucher qui sont appréciés et recherchés.

La qualité de conception des mallettes constitue également un axe de développement exploré pour améliorer cette qualité perçue.

A titre d'exemple, le développement et la fabrication de mécanismes d'articulation du couvercle par rapport au caisson qui présentent un aspect particulièrement discret, tout en étant robuste, contribuent à l'impression de qualité qu'un utilisateur de la mallette ainsi pourvue peut ressentir.

Les mallettes peuvent également être pourvues d'accessoires améliorant encore plus cette qualité perçue.

En tout état de cause, les souhaits de la clientèle de ce type de produit luxueux engendrent un besoin continuel d'amélioration de la qualité perçue et/ou des fonctionnalités de ces produits.

L'intégration de nouvelles fonctionnalités peut également permettre d'améliorer la qualité perçue de ces produits.

Toutefois, une nouvelle fonctionnalité ne doit pas déparer le produit initial. La fonctionnalité doit ainsi être adaptée à l'usage du produit pour éviter que l'utilisateur n'arrive pas, à terme, à adopter la fonctionnalité et à l'intégrer dans sa routine d'utilisation du produit initial.

Le document AU2019101252 A4 décrit un caisson de transport avec un projecteur.

L'invention a ainsi pour objectif de répondre à ces besoins de l'art antérieur.

Plus précisément, l'invention a pour objectif de proposer un bagage rigide qui présente une meilleure attractivité que celle des bagages rigides selon l'art antérieur.

L'invention a également pour objet de fournir un tel bagage rigide qui présente une nouvelle fonctionnalité par rapport à ce qui est proposé par les bagages rigides selon l'art antérieur.

Ces objectifs, ainsi que d'autres qui apparaitront par la suite, sont atteints par l'invention qui a pour objet un bagage rigide comprenant :

- un caisson comprenant un fond et un bandeau périphérique s'étendant depuis le fond, le bandeau périphérique comprenant une paroi arrière, une paroi avant et deux parois latérales

- un couvercle monté mobile sur la paroi arrière au moins autour d'un axe de rotation, le couvercle étant mobile entre une position rabattue sur le caisson et une position d'ouverture maximale, le couvercle présentant une pluralité de positions d'ouverture intermédiaires entre la position rabattue et la position d'ouverture maximale dans lesquelles un espace interne du caisson est accessible ;

caractérisé en ce qu'il comprend un système de vidéo-projection pour créer une projection lumineuse sur une face interne du couvercle à partir d'une image numérique, le système de vidéo-projection comprenant :

- au moins un vidéoprojecteur positionné dans le bandeau périphérique et orienté vers la face interne du couvercle dans ses positions d'ouverture ;
- des moyens de détermination en temps réel de la position du couvercle sur le caisson ;
- une unité de traitement pilotant le ou les vidéoprojecteurs, et étant asservie aux moyens de détermination, l'unité de traitement comprenant des moyens de compensation d'une déformation trapézoïdale de la projection lumineuse par rapport à l'image numérique, les moyens de compensation étant paramétrés pour appliquer un rapport de distorsion trapézoïdale à l'image numérique pour chaque position d'ouverture du couvercle.

Grâce à l'invention, le bagage rigide bénéficie d'un système de vidéo-projection qui permet d'enrichir l'expérience utilisateur de la personne qui utilise le bagage.

Le système de vidéo-projection peut créer une projection lumineuse sur la face interne du couvercle, à partir d'une image numérique, et ce dès son ouverture.

Cette projection lumineuse peut former un effet lumineux particulièrement attrayant sur le couvercle.

Par exemple, un détourage par un trait lumineux de la face interne du couvercle, ou de parties de la face interne du couvercle, peut être réalisé.

La projection lumineuse peut également consister en une zone de notification sur une partie de la face interne du couvercle. La zone de notification peut comporter des informations textuelles à destination de l'utilisateur du bagage.

Grâce aux moyens de détermination et aux moyens de traitement, la projection lumineuse est adaptée à la position adoptée par le couvercle sur le caisson.

L'image numérique peut être ajustée dès que le couvercle est ouvert de manière à ce que la projection lumineuse ne comporte pas de distorsion visible. Une telle distorsion consisterait par exemple en un mauvais cadrage de la projection lumineuse sur la face interne du couvercle.

Plus précisément, dans le cas où un effet lumineux consiste à détourer tout ou partie de la face interne, alors l'adaptation de l'image numérique permet d'éviter une illumination indésirable d'une partie de la face interne ou d'un élément extérieur du bagage. Le détourage obtenu est ainsi toujours parfaitement réalisé, quelle que soit la position d'ouverture adoptée par le couvercle, et ce même si le couvercle est en cours de pivotement.

La modification de l'angle du couvercle engendre une modification de l'inclinaison de la surface sur laquelle est projetée la projection lumineuse grâce au(x) vidéoprojecteur(s).

Cette modification de l'inclinaison entraîne une déformation trapézoïdale si aucune correction n'est réalisée.

En conséquence, les moyens de compensation de la déformation trapézoïdale permettent, grâce à la prise en compte en temps réel de la position du couvercle et ainsi de son inclinaison par rapport au vidéoprojecteur, de déformer l'image numérique à l'aide du rapport de distorsion trapézoïdale. Au final, la projection lumineuse sur le couvercle n'est pas déformée de façon visible pour la personne qui utilise le bagage selon l'invention.

Selon une solution avantageuse, l'unité de traitement comprend des moyens d'ajustement des dimensions de la projection lumineuse en fonction d'une distance entre le couvercle et le ou chaque vidéoprojecteur, les moyens d'ajustement étant paramétrés pour appliquer un rapport d'homothétie à l'image numérique pour chaque position d'ouverture du couvercle.

Grâce aux moyens d'ajustement et au rapport d'homothétie appliqué par ces moyens d'ajustement, alors l'ouverture du couvercle et un éloignement du couvercle par rapport au vidéoprojecteur peuvent être compensés.

Cette solution facilite la conception de l'articulation du couvercle sur le caisson. En effet, il est alors possible de mettre en oeuvre une cinématique d'ouverture et de fermeture du couvercle entraînant une modification de l'éloignement du couvercle par rapport au vidéoprojecteur.

Quelle que soit la position d'ouverture du couvercle, alors la projection lumineuse produite sur le couvercle est adaptée pour conserver les mêmes dimensions.

Par exemple, si une projection lumineuse est conçue pour présenter, des dimensions précises sur la face interne du couvercle, alors ces dimensions sont conservées quel que soit l'angle d'ouverture du couvercle par rapport au caisson.

Selon un mode de réalisation préféré, le bagage rigide comprend une charnière articulant le couvercle sur le caisson, la charnière comprenant :

- un organe suiveur mobile selon un axe de translation entre une première position terminale et une deuxième position terminale ;
- un mécanisme d'entraînement entre l'organe suiveur et le couvercle, l'organe suiveur étant dans sa première position terminale quand le couvercle est dans sa position rabattue, et étant dans sa deuxième position terminale quand le couvercle est dans sa position d'ouverture maximale,

et les moyens de détermination comprennent un capteur de position de l'organe suiveur entre sa première position terminale et sa deuxième position terminale, la position du couvercle étant corrélée à la position de l'organe suiveur.

Grâce à ce mode de réalisation, la position réelle d'ouverture du couvercle est aisément déterminée pour être transmise à l'unité de traitement.

En effet, grâce à l'organe suiveur qui est mobile en translation le long de son axe de translation, il est aisé d'obtenir une distance de déplacement de cet organe suiveur.

En corrélant la position de cet organe suiveur à la position du couvercle, alors l'adaptation en temps réel de l'image numérique pour obtenir une projection lumineuse optimale est plus aisée, et ce notamment par rapport à une cinématique potentiellement complexe d'ouverture et de fermeture du couvercle.

Selon une conception particulièrement avantageuse, ledit vidéoprojecteur est un vidéoprojecteur laser.

De cette manière, le système de vidéo-projection ne nécessite pas de mécanisme d'ajustement d'une focale du vidéoprojecteur.

La conception du système de vidéo-projection est simplifiée, et plus robuste, par rapport à un système qui nécessiterait un mécanisme d'ajustement pourvus de lentilles optiques réglables.

Avantageusement, le bagage rigide forme une mallette porte-documents.

Une mallette porte-documents pourvue du système de vidéo-projection est ainsi particulièrement attractive pour les utilisateurs susceptibles d'utiliser un tel type de bagage.

En effet, le système de vidéo-projection peut présenter divers avantages dans un cadre professionnel, tels que l'affichage de notifications (rendez-vous, e-mail...), de présentations, ou encore de vidéos.

Selon une première solution, le bagage rigide comprend un unique vidéoprojecteur situé dans la paroi avant du bandeau périphérique.

Dans cette position, le vidéoprojecteur permet de créer une projection lumineuse apte à illuminer toute, ou à tout le moins l'essentiel, de la face interne du couvercle.

Selon une deuxième solution, le bagage rigide comprend une pluralité de vidéoprojecteurs répartis dans les parois latérales et/ou la paroi avant du bandeau périphérique.

Dans ce cas, la pluralité de vidéoprojecteurs permet d'illuminer l'ensemble de la face interne du couvercle, et ce même si cette face interne présente un relief.

De plus, la présence de multiples vidéoprojecteurs permet de compenser, le cas échéant, une défaillance de l'un des vidéoprojecteurs, ou l'incapacité de l'un des vidéoprojecteurs à illuminer correctement l'une des zones de la face interne du couvercle.

Enfin, l'utilisation de multiples vidéoprojecteurs permet de créer des effets lumineux additionnant les projections lumineuses de plusieurs vidéoprojecteurs, ce qui est impossible dans le cas où un unique vidéoprojecteur est utilisé.

Avantageusement, le bagage rigide comprend au moins une caméra couplée à l'unité de traitement, la ou les caméras étant aptes à détecter des obstacles situés dans un champ de projection du vidéoprojecteur de la projection lumineuse image sur le couvercle, et l'unité de traitement est paramétrée pour adapter l'image numérique destinée à être projetée sur la face interne du couvercle afin de ne pas illuminer un ou des obstacles situés dans le champ de projection.

Une telle caméra permet d'éviter que la projection lumineuse obtenue soit dégradée par un obstacle situé dans le champ de projection du ou des vidéoprojecteurs.

De cette manière, l'unité de traitement permet notamment de rogner l'image numérique destinée à être projetée ou de désactiver une ou plusieurs composantes de l'image numérique.

Par exemple, si un obstacle est situé sur une partie gauche du champ de projection du vidéoprojecteur, et détecté par la caméra, alors l'unité de traitement entraîne la désactivation de la partie gauche de l'image numérique et ne permet la création d'une projection lumineuse que sur la section droite de la face interne du couvercle.

D'autres caractéristiques et avantages de l'invention apparaîtront plus clairement à la lecture de la description suivante de deux modes de réalisation préférentiels de l'invention, donnés à titre d'exemples illustratifs et non limitatifs, et des dessins annexés parmi lesquels :

[Fig. 1] La figure 1 est une représentation schématique d'un premier mode de réalisation d'un bagage rigide selon l'invention, ainsi que de son fonctionnement pour créer une projection lumineuse sur une face interne d'un couvercle du bagage rigide ;
[Fig. 2] La figure 2 est une représentation schématique selon une vue latérale illustrant un mécanisme d'ouverture et de fermeture du couvercle du bagage rigide selon l'invention ;
[Fig. 3] La figure 3 est une représentation schématique selon une vue en perspective d'un second mode de réalisation du bagage rigide selon l'invention, dans lequel il présente deux vidéoprojecteurs.

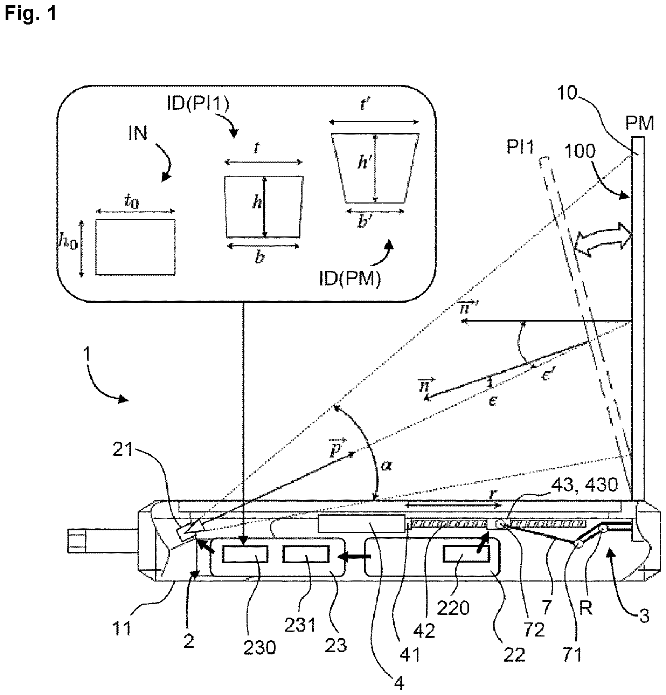

En référence aux figures 1 à 3, un bagage 1 rigide selon l'invention est représenté.

Selon les présents modes de réalisation, le bagage 1 rigide est plus spécifiquement une mallette porte-documents.

Le bagage 1 rigide comprend un caisson 11 et un couvercle 10.

En référence aux figures 1, 2 et 3, le caisson 11 comprend :

- un fond 110 ;
- un bandeau périphérique 111 qui s'étend à partir du fond 110.

Le bandeau périphérique 111 comprend plus précisément une paroi arrière 112, une paroi avant 113 et deux parois latérales 114 qui s'étendent entre la paroi arrière 112 et la paroi avant 113.

Le caisson 11 délimite un espace interne 12 qui est susceptible de recevoir, par exemple, des objets tels que des documents.

Ce caisson 11 adopte une forme de parallélépipède rectangle.

Le couvercle 10 est plus précisément monté mobile sur la paroi arrière 112.

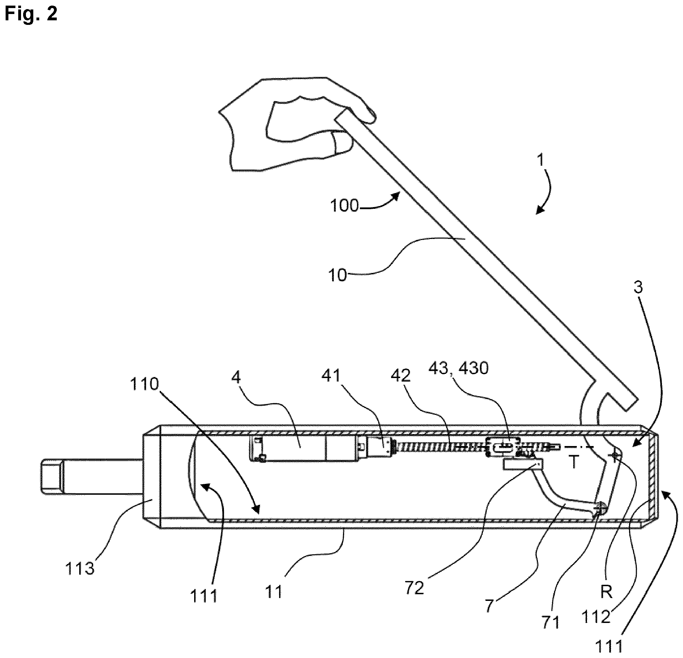

Tel qu'illustré par les figures 1 et 2, le couvercle 10 est notamment mobile en rotation, autour d'un axe de rotation R.

Selon le présent mode de réalisation, cet axe de rotation R est fixe par rapport au caisson 11.

Ce couvercle 10 est mobile entre une position rabattue sur le caisson 11 dans laquelle il empêche l'accès à l'espace interne 12 du caisson 11, et des positions d'ouverture (PI1, PM).

Le couvercle 10 présente notamment une position d'ouverture maximale PM qu'il ne peut dépasser, et une pluralité de positions d'ouverture intermédiaires PI (dont PI1) entre la position rabattue et la position d'ouverture maximale PM.

Dans cette position d'ouverture maximale PM, le couvercle 10 laisse libre accès à l'espace interne 12 du caisson 11.

Le couvercle 10 présente une face interne 100. Cette face interne 100 fait face à l'espace interne 12 du caisson 11 quand le couvercle est dans sa position rabattue.

La face interne 100 est destinée à être visible d'un utilisateur qui ouvre le bagage 1 rigide.

Selon le présent mode de réalisation, le bagage 1 comprend une charnière 3 qui articule le couvercle 10 sur le caisson 11.

Le bagage 1 comprend également un mécanisme moteur 4 qui est apte à entraîner l'ouverture ou la fermeture du couvercle 10.

Plus spécifiquement et tel que cela est représenté sur les figures 1 et 2, le mécanisme moteur comprend :

- un moteur 4 électrique ;
- un réducteur 41 ;
- une vis 42 couplée au moteur 4 et au réducteur 41 pour pouvoir être entraînée en rotation dans un premier sens ou dans un second sens opposés ;
- un écrou 430 à billes couplé sur la vis 42 et mobile le long d'un axe de translation T qui est formé par l'axe d'extension de la vis 42.

L'écrou 430 à billes forme notamment un organe suiveur 43.

Toujours selon le présent mode de réalisation, la charnière 3 comprend un bras de transmission 7 qui couple l'organe suiveur 43 (ou écrou 430 à billes) au couvercle 10.

Plus particulièrement, le bras de transmission 7 est couplé à une première extrémité au couvercle 10 sur un premier point de pivot 71 qui est excentré de l'axe de rotation R du couvercle 10. Ce bras de transmission 7 est également couplé par une seconde extrémité, opposée à la première extrémité, à l'organe suiveur 43 sur un second point de pivot 72.

Le bagage 1 est configuré de manière à ce qu'une translation de l'organe suiveur 43 selon un premier sens entraîne l'ouverture du couvercle 10, et qu'une translation de l'organe suiveur 43 selon un second sens entraîne une fermeture du couvercle 10.

Plus spécifiquement, l'organe suiveur 43 est mobile le long de l'axe de translation T entre une première position terminale et une deuxième position terminale.

Le bras de transmission 7 forme un mécanisme de liaison entre l'organe suiveur 43 et le couvercle 10.

Quand l'organe suiveur 43 est dans sa première position terminale, le couvercle est dans sa position rabattue.

A l'opposé, quand l'organe suiveur 43 est dans sa deuxième position terminale, alors le couvercle 10 est dans sa position d'ouverture maximale PM.

Une rotation de la vis 42 sous l'effet du moteur 4 électrique et du réducteur 41 entraîne un déplacement de l'écrou 430 le long de la vis 42, et ainsi de l'organe suiveur 43 le long de l'axe de translation T.

Le moteur 4 électrique peut ainsi provoquer une ouverture ou une fermeture du couvercle 10.

Le mode de réalisation précédemment décrit comprend un moteur. Toutefois, il est envisageable qu'un moteur ne soit pas intégré.

Dans ce cas, le bagage comprend une charnière et un organe suiveur qui est mobile le long d'un axe de translation. Selon ce mode de réalisation, l'organe suiveur a pour seule fonction de servir d'indicateur de position du couvercle 10 sur le caisson 11.

En référence aux figures 1 à 3 et selon le principe de l'invention, le bagage 1 rigide comprend également un système de vidéo-projection 2.

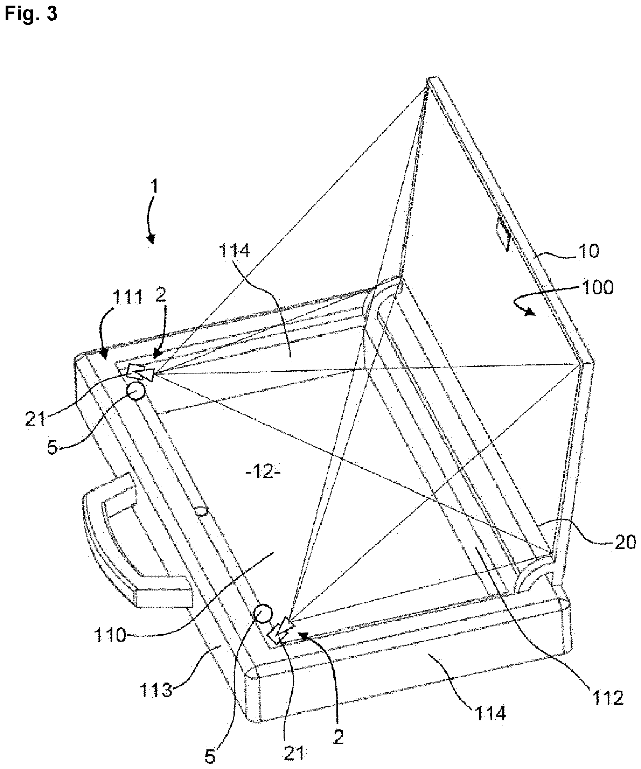

Tel que cela est illustré par la figure 3, le système de vidéo-projection 2 permet de créer une projection lumineuse 20 sur la face interne 100 du couvercle 10.

Cette projection lumineuse 20 est créée à partir d'une image numérique IN.

L'image numérique IN peut être issue d'un fichier numérique enregistré dans le système de vidéo-projection 2 ou être issue d'une source externe, tel qu'un ordiphone qui serait associé au bagage 1 rigide et qui communiquerait avec ce dernier.

L'image numérique IN peut également être issue d'une association d'un ordiphone et du système de vidéo-projection 2 du bagage 1 rigide.

Dans ce cas, l'ordiphone peut par exemple être configuré pour émettre, sans fil à direction du bagage 1 rigide, une information encodée, par exemple du texte. Ensuite, par le biais de son système de vidéo-projection 2 le bagage 1 rigide peut décoder ce message, l'associer avec une image, ou un flux vidéo préenregistré, et former une projection lumineuse 20 à créer sur la face interne 100 du couvercle 10.

Toujours selon le principe de l'invention, le système de vidéo-projection 2 comprend :

- au moins un vidéoprojecteur 21 ;
- des moyens de détermination 22 en temps réel de la position du couvercle 10 sur le caisson 11 ;
- une unité de traitement 23 pilotant le ou les vidéoprojecteurs 21, et étant asservie aux moyens de détermination 22.

Le ou les vidéoprojecteurs 21 sont positionnés dans le bandeau périphérique 111 et sont orientés vers la face interne 100 du couvercle 10 dans l'une de ses positions d'ouverture.

En référence au mode de réalisation illustré par la figure 1, le bagage 1 rigide comprend un unique vidéoprojecteur 21 qui est situé dans la paroi avant 113 du bandeau périphérique 111.

Ce vidéoprojecteur 21 est positionné de manière à pouvoir créer une projection lumineuse 20 sur l'ensemble de la face interne 100 du couvercle 10, et ce quelle que soit la position d'ouverture du couvercle 10.

En référence au mode de réalisation illustré par la figure 3, le bagage 1 rigide comprend deux vidéoprojecteurs 21 qui sont répartis dans les parois latérales 114 et/ou la paroi avant 113 du bandeau périphérique 111.

Plus spécifiquement, les vidéoprojecteurs 21 sont situés à la jonction des parois latérales 114 avec la paroi avant 113.

Ces deux vidéoprojecteurs 21 permettent de créer une projection lumineuse 20 depuis deux positions différentes réparties le long du bandeau périphérique 111.

Ces deux vidéoprojecteurs 21 permettent ainsi, le cas échéant, d'éclairer des surfaces de la face interne 100 qui présentent un relief susceptible de limiter une bonne projection lumineuse à l'aide d'un seul vidéoprojecteur 21.

Tel qu'expliqué précédemment, le bagage 1 rigide permet d'obtenir une projection lumineuse 20 adaptée en temps réel à la position du couvercle 10.

En référence à la figure 1, les moyens de détermination 22 en temps réel de la position du couvercle 10 sur le caisson 11 comprennent un capteur 220 de position de l'organe suiveur 43.

Ces moyens de détermination 22 permettent de déterminer un déplacement R de l'organe suiveur 43 le long de son axe de translation T.

Le capteur de position 220 de l'organe suiveur 43 permet ainsi de déterminer la position de cet organe suiveur 43 entre sa première position terminale et sa deuxième position terminale.

La position du couvercle 10 peut alors être corrélée à la position de l'organe suiveur 43.

Toujours en référence à la figure 1, l'unité de traitement 23 permet de piloter le ou les vidéoprojecteurs 21.

Selon le principe de l'invention, l'unité de traitement 23 comprend des moyens de compensation 230 d'une déformation trapézoïdale de la projection lumineuse 20 par rapport à l'image numérique IN.

Ces moyens de compensation 230 sont paramétrés pour appliquer un rapport de distorsion trapézoïdale à l'image numérique IN pour chaque position d'ouverture du couvercle 10.

Grâce aux moyens de compensation 230 d'une déformation trapézoïdale, la variation angulaire du couvercle 10 n'engendre pas de déformation de l'image en trapèze.

Selon le présent mode de réalisation, l'unité de traitement 23 comprend également des moyens d'ajustement 231 des dimensions de la projection lumineuse 20 en fonction d'une distance entre le couvercle 10 et le ou chaque vidéoprojecteur 21.

Ces moyens d'ajustement 232 sont paramétrés pour appliquer un rapport d'homothétie à l'image numérique IN pour chaque position d'ouverture du couvercle 10.

Pour rappel, en géométrie, une homothétie est une transformation géométrique correspond à un agrandissement ou à une réduction.

En référence à la figure 1, le rapport de distorsion trapézoïdale ainsi que le rapport d'homothétie peuvent, par exemple, être définis de la manière suivante :

- $\vec{p}$ correspond au vecteur portant l'axe de projection du ou de chaque vidéoprojecteurs 21 ;

- $\vec{n}$ correspond au vecteur normal au plan image (défini par le couvercle 10) ;
- t, b, h correspondent respectivement à une grande base, une petite base et une hauteur de l'image numérique IN destinée à être projetée sur le plan image ;
- r correspond à la position de l'organe suiveur 43 le long de l'axe de translation T;
- $\alpha$ correspond à l'angle focal du vidéoprojecteur 21 ;
- $\varepsilon$ correspond à l'angle entre $\vec{p}$ et $\vec{n}$.

L'image numérique IN permet également de définir par to = bo et ho les dimensions de l'image de référence (c'est-à-dire l'image non distordue).

Cette image non distordue est obtenue (ou projetée) quand $\varepsilon_0 = \pi$.

Tel qu'expliqué précédemment, la correction numérique de l'image lors de la projection numérique 20 est réalisée selon le présent mode de réalisation par le biais des :

- rapport de distorsion : $\beta$ = b/t ;
- rapport d'homothétie : $\gamma$ = h/h$_0$.

Le rapport de distorsion est alors une fonction de $\alpha$ et de $\varepsilon$, et dans le cas des petits angles, il s'exprime ainsi :

$$\beta = ( \cos( \varepsilon - (\alpha/2))) / ( \cos( \varepsilon + (\alpha/2)))$$

Comme $\alpha$ est une caractéristique du vidéoprojecteur 21 et est donc fixe et connue, et que $\varepsilon$ peut, par le modèle géométrique de la charnière 3 s'exprimer en fonction de r, alors le rapport de distorsion s'exprime simplement par la fonction $\beta$ = f (r).

Vis-à-vis du rapport d'homothétie, il peut facilement s'exprimer par trigonométrie en fonction de $\alpha$ et de $\varepsilon$ et, par conséquent, de r, ainsi que par do qui correspond à la distance entre le vidéoprojecteur 21 et le couvercle 10 quand l'image numérique IN projetée sur le couvercle 10 n'est naturellement pas distordue.

Le rapport d'homothétie est le suivant :

[Math 1]

$$\gamma = \frac{h}{h_0} = \frac{1}{2\cos\varepsilon} + \left(\frac{d_0}{h_0} - \frac{\tan\varepsilon}{2}\right)\frac{\sin\alpha/2}{\sin(\frac{\alpha}{2} + \frac{\pi}{2} - \varepsilon)}$$

Cette équation permet de savoir où se situe le centre de l'image et ce quel que soit l'angle d'ouverture du couvercle 10.

L'unité de traitement 23 permet d'appliquer numériquement, sur la base du rapport de distorsion et du rapport d'homothétie, les transformations géométriques sur l'image numérique IN afin que la projection lumineuse 20 respecte les dimensions originales (to, bo, ho) de l'image numérique IN et ainsi sa géométrie, quel que soit l'ange d'ouverture du couvercle 10.

Pour obtenir une projection lumineuse 20 respectant constamment les dimensions originales, l'image numérique IN est déformée continuellement en temps réel en fonction de la position d'ouverture réelle du couvercle 10.

Par exemple, pour la position d'ouverture maximale PM du couvercle 10, l'unité de traitement 23 modifie géométriquement l'image numérique IN pour former une image déformée relative à la position d'ouverture maximale ID(PM) présentant une grande base t', une petite base b' et une hauteur h' spécifiques de cette position, et qui est notamment différente de l'image déformée correspondant à une position d'ouverture intermédiaire ID(PI1) présentant une grande base t, une petite base b et une hauteur h différentes, et qui sont destinées à être envoyées au vidéoprojecteur 21.

En référence à la figure 3, et selon un mode de réalisation envisageable, le bagage 1 rigide peut également comprendre des caméras 5 qui sont couplées à l'unité de traitement 23. Ces caméras 5 sont alors aptes à détecter des corps étrangers situés devant la face interne 100 du couvercle 10.

Ces corps étrangers forment des obstacles susceptibles de perturber la projection lumineuse 20 produite par le ou les vidéoprojecteurs 21 sur la face interne 100 du couvercle 10.

L'unité de traitement 23 est alors paramétrée pour adapter l'image numérique IN destinée à être projetée sur la face interne 100 du couvercle 10 afin de ne pas illuminer le ou les obstacles situés dans le champ de projection.

Dans ce cas, l'unité de traitement 23 analyse et détermine la position des obstacles entre le ou les vidéoprojecteurs 21 et la face interne 100 du couvercle 10. Suite à cette détermination, l'unité de traitement 23 analyse quelle partie de la projection lumineuse 20 est susceptible de ne pas pouvoir être réalisée correctement du fait de la présence de l'obstacle.

Ensuite, selon des consignes préenregistrées, l'unité de traitement 23 peut, soit arrêter complètement les vidéoprojecteurs 21 et arrêter la production d'une projection lumineuse 20 sur la face interne 100 du couvercle 10, soit tronquer une partie de la projection lumineuse 20.

La projection lumineuse 20 est alors adaptée en temps réel pour éviter qu'une perturbation (un obstacle) provoque un résultat inattendu sur la face interne 100 du couvercle 10.

**Revendications**

1. Bagage (1) rigide comprenant :

   - un caisson (11) comprenant un fond (110) et un bandeau périphérique (111) s'étendant depuis le fond (110), le bandeau périphérique (111) comprenant une paroi arrière (112) , une paroi avant (113) et deux parois latérales (114) ;
   - un couvercle (10) monté mobile sur la paroi arrière (112) au moins autour d'un axe de rotation (R), le couvercle (10) étant mobile entre une position rabattue sur le caisson (11) et une position d'ouverture maximale, le couvercle (10) présentant une pluralité de positions d'ouverture intermédiaires entre la position rabattue et la position d'ouverture maximale dans lesquelles un espace interne (12) du caisson (11) est accessible ;
   - -un système de vidéo-projection (2) pour créer une projection lumineuse (20) sur une face interne (100) du couvercle (10) à partir d'une image numérique (IN), le système de vidéo-projection (2) comprenant :

     - au moins un vidéoprojecteur (21) positionné dans le bandeau périphérique (111) et orienté vers la face interne (100) du couvercle (10) dans ses positions d'ouverture ;
     - des moyens de détermination (22) en temps réel de la position du couvercle (10) sur le caisson (11) ;
     - une unité de traitement (23) pilotant le ou les vidéoprojecteurs (21), et étant asservie aux moyens de détermination (22), l'unité de traitement (23) comprenant des moyens de compensation (230) d'une déformation trapézoïdale de la projection lumineuse (20) par rapport à l'image numérique (IN), les moyens de compensation (230) étant paramétrés pour appliquer un rapport de distorsion trapézoïdale à l'image numérique (IN) pour chaque position d'ouverture du couvercle (10).

2. Bagage (1) rigide selon la revendication précédente, l'unité de traitement (23) comprenant des moyens d'ajustement (231) des dimensions de la projection lumineuse (20) en fonction d'une distance entre le couvercle (10) et le ou chaque vidéoprojecteur (21), les moyens d'ajustement (231) étant paramétrés pour appliquer un rapport d'homothétie à l'image numérique (IN) pour chaque position d'ouverture du couvercle (10).

3. Bagage (1) rigide selon l'une quelconque des revendications précédentes, comprenant une charnière (3) articulant le couvercle (10) sur le caisson (11), la charnière (3) comprenant :

   - un organe suiveur (43) mobile selon un axe de translation (T) entre une première position terminale et une deuxième position terminale ;
   - un mécanisme d'entraînement entre l'organe suiveur (43) et le couvercle (10), l'organe suiveur (43) étant dans sa première position terminale quand le couvercle (10) est dans sa position rabattue, et étant dans sa deuxième position terminale quand le couvercle (10) est dans sa position d'ouverture maximale,

   et en ce que les moyens de détermination (22) comprennent un capteur de position (220) de l'organe suiveur (43) entre sa première position terminale et sa deuxième position terminale, la position du couvercle (10) étant corrélée à la position de l'organe suiveur (43).

4. Bagage (1) rigide selon l'une quelconque des revendications dont ledit au moins vidéoprojecteur (21) est un vidéoprojecteur laser.

5. Bagage (1) rigide selon l'une quelconque des revendications formant une mallette porte-documents.

6. Bagage (1) rigide selon l'une quelconque des revendications précédentes, comprenant un unique vidéoprojecteur (21) situé dans la paroi avant (113) du bandeau périphérique (111).

7. Bagage (1) rigide selon l'une quelconque des revendications 1 à 5, comprenant une pluralité de vidéoprojecteurs (21) répartis dans les parois latérales (114) et/ou la paroi avant (113) du bandeau périphérique (111).

8. Bagage (1) rigide selon l'une quelconque des revendications précédentes, comprenant au moins une caméra (5) couplée à l'unité de traitement (23), la ou les caméras (5) étant aptes à détecter des obstacles situés dans un champ de projection du vidéoprojecteur (21) de la projection lumineuse (20) sur le couvercle (10), et en ce que l'unité de traitement (23) est paramétrée pour adapter l'image numérique (IN) destinée à être projetée sur la face interne (100) du couvercle (10) afin de ne pas illuminer un ou des obstacles situés dans le champ de projection.

**Patentansprüche**

1. Starres Gepäck (1), umfassend:

   - einen Kasten (11), der einen Boden (110) und ein umlaufendes Band (111) umfasst, das sich ab dem Boden (110) erstreckt, wobei das umlaufende Band (111) eine hintere Wand (112), eine vordere Wand (113) und zwei seitliche Wände (114) umfasst;
   - einen Deckel (10), der an der hinteren Wand (112) mindestens um eine Rotationsachse (R) herum beweglich angebracht ist, wobei der Deckel (10) zwischen einer auf den Kasten (11) heruntergeklappten Position und einer maximalen Öffnungsposition beweglich ist, wobei der Deckel (10) eine Vielzahl von Übergangs-Öffnungspositionen zwischen der heruntergeklappten Position und der maximalen Öffnungsposition aufweist, in denen ein Innenraum (12) des Kastens (11) zugänglich ist;
   - ein Videoprojektionssystem (2), um eine Lichtprojektion (20) auf einer inneren Fläche (100) des Deckels (10) anhand eines digitalen Bildes (IN) zu erzeugen, wobei das Videoprojektionssystem (2) umfasst:
   - mindestens einen Videoprojektor (21), der in dem umlaufenden Band (111) positioniert und zu der inneren Fläche (100) des Deckels (10) in seinen Öffnungspositionen ausgerichtet ist;
   - Mittel zum Bestimmen (22) in Echtzeit der Position des Deckels (10) auf dem Kasten (11);
   - eine Verarbeitungseinheit (23), die den oder die Videoprojektoren (21) steuert und den Bestimmungsmitteln (22) untergeordnet ist, wobei die Verarbeitungseinheit (23) Ausgleichsmittel (230) einer trapezförmigen Verformung der Lichtprojektion (20) im Verhältnis zu dem digitalen Bild (IN) umfasst, wobei die Ausgleichsmittel (230) eingestellt sind, um ein Verhältnis der Trapezverzerrung auf das digitale Bild (IN) für jede Öffnungsposition des Deckels (10) anzuwenden.

2. Starres Gepäck (1) nach vorangehendem Anspruch, wobei die Verarbeitungseinheit (23) Anpassungsmittel (231) der Abmessungen der Lichtprojektion (20) in Abhängigkeit von einem Abstand zwischen dem Deckel (10) und dem oder jedem Videoprojektor (21) umfasst, wobei die Anpassungsmittel (231) eingestellt sind, um ein Homothetieverhältnis auf das digitale Bild (IN) für jede Öffnungsposition des Deckels (10) anzuwenden.

3. Starres Gepäck (1) nach einem der vorangehenden Ansprüche, umfassend ein Scharnier (3), das den Deckel (10) am Kasten (11) anlenkt, wobei das Scharnier (3) umfasst:

   - ein Verfolgerorgan (43), das gemäß einer Translationsachse (T) zwischen einer ersten Endposition und einer zweiten Endposition beweglich ist;
   - einen Antriebsmechanismus zwischen dem Verfolgerorgan (43) und dem Deckel (10), wobei das Verfolgerorgan (43) in seiner ersten Endposition ist, wenn der Deckel (10) in seiner heruntergeklappten Position ist, und in seiner zweiten Endposition ist, wenn der Deckel (10) in seiner maximalen Öffnungsposition ist, und dass die Bestimmungsmittel (22) einen Positionssensor (220) des Verfolgerorgans (43) zwischen seiner ersten Endposition und seiner zweiten Endposition umfassen, wobei die Position des Deckels (10) mit der Position des Verfolgerorgans (43) korreliert.

4. Starres Gepäck (1) nach einem der vorangehenden Ansprüche, wobei der mindestens Videoprojektor (21) ein Laser-Videoprojektor ist.

5. Starres Gepäck (1) nach einem der vorangehenden Ansprüche, das eine Dokumententrägertasche bildet.

6. Starres Gepäck (1) nach einem der vorangehenden Ansprüche, umfassend einen einzigen Videoprojektor (21), der sich in der vorderen Wand (113) des umlaufenden Bandes (111) befindet.

7. Starres Gepäck (1) nach einem der Ansprüche 1 bis 5, umfassend eine Vielzahl von Videoprojektoren (21), die in den seitlichen Wänden (114) und/oder der vorderen Wand (113) des umlaufenden Bandes (111) verteilt sind.

8. Starres Gepäck (1) nach einem der vorangehenden Ansprüche, umfassend mindestens eine Kamera (5), die an die Verarbeitungseinheit (23) gekoppelt ist, wobei die Kamera(s) (5) geeignet sind, Hindernisse zu ermitteln, die sich in einem Projektionsfeld des Videoprojektors (21) der Lichtprojektion (20) auf den Deckel (10) befinden, und dass die Verarbeitungseinheit (23) eingestellt ist, um das digitale Bild (IN) anzupassen, das zur Projektion auf die innere Fläche (100) des Deckels (10) bestimmt ist, um nicht ein oder mehrere Hindernisse zu beleuchten, die sich im Projektionsfeld befinden.

**Claims**

1. A rigid luggage (1) comprising:

   - a box (11) comprising a bottom (110) and a peripheral strip (111) extending from the bottom (110), the peripheral strip (111) comprising a rear wall (112), a front wall (113) and two side walls (114);
   - a cover (10) movably mounted on the rear wall (112) at least about an axis of rotation (R), the cover (10) being movable between a position folded on the box (11) and a maximum opening position, the cover (10) having a plurality of intermediate opening positions between the folded position and the maximum opening position in which an internal space (12) of the box (11) is accessible;
   - a video projection system (2) for creating a light projection (20) on an inner face (100) of the cover (10) from a digital image (IN), the video projection system (2) comprising:

     - at least one video projector (21) positioned in the peripheral strip (111) and oriented towards the inner face (100) of the cover (10) in its opening positions;
     - means (22) for determining in real time the position of the cover (10) on the box (11);
     - a processing unit (23) controlling the video projector(s) (21), and being servo-controlled to the determination means (22), the processing unit (23) comprising means for compensating (230) a trapezoidal deformation of the light projection (20) relative to the digital image (IN), the compensation means (230) being parameterized to apply a trapezoidal distortion ratio to the digital image (IN) for each opening position of the cover (10).

2. The rigid luggage (1) according to the preceding claim, the processing unit (23) comprising means (231) for adjusting the dimensions of the light projection (20) as a function of a distance between the cover (10) and the or each video projector (21), the adjustment means (231) being parameterized to apply a homothetic ratio to the digital image (IN) for each opening position of the cover (10).

3. The rigid luggage (1) according to any one of the preceding claims, comprising a hinge (3) articulating the cover (10) on the box (11), the hinge (3) comprising:

   - a follower member (43) movable along a translation axis (T) between a first terminal position and a second terminal position;
   - a drive mechanism between the follower member (43) and the cover (10),

     the follower member (43) being in its first terminal position when the cover (10) is in its folded position, and being in its second terminal position when the cover (10) is in its maximum opening position, and in that the determination means (22) comprise a position sensor (220) for the follower member (43) between its first terminal position and its second terminal position, the position of the cover (10) being correlated to the position of the follower member (43).

4. The rigid luggage (1) according to any one of the claims, whose said at least one video projector (21) is a laser video projector.

5. The rigid luggage (1) according to any one of the claims forming a document briefcase.

6. The rigid luggage (1) according to any one of the preceding claims, comprising a single video projector (21) located in the front wall (113) of the peripheral strip (111).

7. The rigid luggage (1) according to any one of claims 1 to 5, comprising a plurality of video projectors (21) distributed in the side walls (114) and/or the front wall (113) of the peripheral strip (111).

8. The rigid luggage (1) according to any one of the preceding claims, comprising at least one camera (5) coupled to the processing unit (23), the camera(s) (5) being able to detect obstacles located in a projection field of the video projector (21) of the light projection (20) on the cover (10),
and in that the processing unit (23) is parameterized to adapt the digital image (IN) intended to be projected on the inner face (100) of the cover (10) so as not to illuminate one or several obstacles located in the projection field.

**Fig. 1**

**Fig. 2**

**Fig. 3**

**EP 4 157 028 B1**

## RÉFÉRENCES CITÉES DANS LA DESCRIPTION

**Documents brevets cités dans la description**

- AU 2019101252 A4